# EUROPEAN PATENT APPLICATION

(11) **EP 2 843 463 A1**
(43) Date of publication of application: **04.03.2015**
(21) Application number: 14179651.6
(22) Date of filing: 04.08.2014
(51) Int. Cl.: G02F 1/13357

(54) **Backlit display device**

(30) Priority: 19.08.2013 JP 2013169546
(71) Applicant: Funai Electric Co., Ltd., Daito city Osaka 574-0013 (JP)
(72) Inventor: Suzuki, Tomokazu, Osaka, Osaka 574-0013 (JP); Nameda, Makoto, Osaka, Osaka 574-0013 (JP)
(74) Representative: Osha Liang SARL

(57) **Abstract**

A display device (100) comprises a display unit (1), a light source (7) disposed on a back surface side of the display unit (1) and configured to irradiate light to the display unit (1), an optical member (11, 12) disposed between the display unit (1) and the light source (7), and a support member (13) of tabular shape configured to transmit light irradiated from the light source (7) and support the optical member (11, 12) from a back surface side of the optical member (11, 12). The support member (13) comprises a first surface (13c) and a second surface (13d) and is disposed so that the first surface (13c) faces the light source (7).

## Description

### [Technical Field]

This invention relates to a display device and more particularly to a display device comprising a support member supporting an optical member.

### [Background Technology]

Conventional display devices are provided with a support member that supports an optical member (for example, see Patent Document 1).

Disclosed in the above Patent Document 1 is a liquid crystal display device (display device) provided with an optical member that transmits a light from an LED, and a support pin (support member) installed to a bottom surface of a backlight chassis and that supports the optical member. In this liquid crystal display device, the support pin is formed by a resin of a transparent type and has a columnar shape having a bottom surface of a circular shape or a square shape.

### [Related Art Documents]

### [Patent Documents]

[Patent Document 1] PCT International Publication No. WO 2011/010487

However, in the liquid crystal display device disclosed in the above Patent Document 1, because the support pin that supports the optical member is formed by the resin of the transparent type and has the columnar shape having the bottom surface with the circular or the square shape, light from the LED that enters in the support pin is reflected or refracted at an inner side of a side surface of the support pin of the columnar shape, which side surface has a comparatively large width (surface area). Because of this, unevenness is more likely to occur in an amount of light transmitted through the optical member (there is a defect where a shadow is more likely to form). As a result, unevenness in the amount of light occurs in a display unit where a video or the like is displayed by light transmitted through the optical member.

### [Summary of the Invention]

One or more embodiments of the present invention provide a display device that can suppress unevenness in an amount of light from occurring in a display unit thereof.

A display device according to one or more embodiments of the invention may comprise: a display unit; a light source disposed on a back surface side of the display unit and configured to irradiate light to the display unit; an optical member, for example of tabular or plate shape, disposed between the display unit and the light source; and a support member of tabular or plate shape configured to transmit light irradiated from the light source and support the optical member from a back surface side of the optical member, wherein the support member may comprise a first top surface and a second top surface and may be disposed so that the first top surface faces the light source.

According to one or more embodiments of the display device, for example, by disposing the support member of tabular shape, which may have a small thickness and a side surface perpendicular to the first surface and the other surfaces of narrow width, so that the first surface thereof faces the light source, as described above, unevenness in the amount of light transmitted through the optical member is less likely to occur (a shadow is less likely to form) because the amount of light reflected or refracted at an inner side of a side surface of the support member of tabular shape is more limited with respect to a situation where the support member has a columnar shape having a bottom side of a circular shape or a square shape. As a result, the unevenness in the amount of light can be suppressed from occurring in the display unit that displays by light transmitted through the optical member.

According to one or more embodiments of the display device, the support member may further comprise: a contact portion contacting the optical member; a first upper side extending from the contact portion to an outer side of the support member; and a lateral side extending from the first upper side to a side opposite the optical member, wherein the first upper side of the support member may have a predetermined inclination angle of relative to a straight line extending in a vertical direction relative to the optical member and passing through the contact portion of the support member. For example, such a predetermined inclination angle of the first upper side may be 15 degrees or more, for example 15 degrees or more and less than 90 degrees.

According to one or more embodiments, for example, by configuring in this manner, shadows occurring due to light reflecting or refracting at the inner side of the side surface of the support member of tabular shape do not approach each other because a gap between two lateral sides extending from the upper side to the side opposite the optical member increases (that is, widths of the first top surface and the other top surface widens). As a result, the unevenness in the amount of light can be further reduced from occurring in the display unit that displays by the light transmitted through the optical member.

According to one or more embodiments of the display device, the support member may further comprise a second upper side having a predetermined inclination angle relative to a straight line extending in a vertical direction relative to the optical member and passing through the contact portion of the support member. The predetermined inclination angle of the second upper side may be different from or the same as the inclination angle of the first upper side.

According to one or more embodiments of the display device, the inclination angle of the second upper side is the same as the inclination angle of the first upper side.

According to one or more embodiments, for example, by configuring in this manner, a gap between two lateral sides extending from the two upper sides to the side opposite the optical member increases reliably. That is, the shadows occurring due to the light reflecting or refracting at the inner side of the side surface of the support member of the tabular shape do not approach each other because the widths of the first top surface and the other top surface widens reliably. As a result, the unevenness in the amount of light can be further reduced from occurring in the display unit that displays by the light transmitted through the optical member.

According to one or more embodiments of the display device, a thickness of the support member of the tabular shape may be about 1/5 or less than a width in a direction parallel to a top surface of the optical member in the first top surface of the support member of the tabular shape.

According to one or more embodiments, for example, by configuring in this manner, the unevenness in the amount of light in the display unit that displays by the light transmitted through the optical member can be effectively suppressed from occurring because the amount of light reflected or refracted at the inner side of the side surface that has a narrow width identical to the thickness of the support member of the tabular shape can be decreased as the thickness of the support member of the tabular shape can be decreased.

According to one or more embodiments of the display device, the contact portion contacting the optical member may be formed in a hemispherical shape.

According to one or more embodiments, for example, by configuring in this manner, an area of a shadow on the optical member occurring due to reflection at the contact portion can be made small, unlike when the support member of the tabular shape and the optical member make surface or line contact, because the support member of the tabular shape and the optical member make a punctual contact. As a result, the unevenness in the amount of light can be further reduced from occurring in the display unit that displays by the light transmitted through the optical member.

According to one or more embodiments of the invention of the display device, the upper side of the support member may have a concave shape, for example a concave shape recessed toward the side opposite the optical member.

According to one or more embodiments, for example, by configuring in this manner, a shadow occurring due to light emitted from the light source being reflected or refracted by an inner side of the upper side of the support member can be diffused and made less noticeable as a distance between the upper side and the optical member is increased, unlike when the upper side of the support member of tabular shape is configured to have a convex shape protruding toward an optical member side.

According to one or more embodiments of the display device, the support member may further comprise an opening portion formed in a region where a shadow does not fall on the optical member.

According to one or more embodiments, for example, by configuring in this manner, the support member can be formed with less material as some material of the support member may be removed, unlike when the opening portion is not provided in the region of the support member of the tabular shape where the shadow does not fall on the optical member. Unevenness in an amount of light to the optical member and the display unit does not occur even when the shadow occurs due to the opening portion because the opening portion is provided in the region in the support member of the tabular shape where the shadow does not fall on the optical member. Therefore, the amount of the material of the support member can be reduced while suppressing the unevenness in the amount of light.

According to one or more embodiments of the present invention, the display device that can suppress the unevenness in the amount of light from occurring in the display unit can be provided.

### [Brief Description of Drawings]

FIG. 1 is a perspective view illustrating an overall configuration of a liquid crystal television device according to one or more embodiments of a first example of the present invention.
FIG. 2 is a rear view of the liquid crystal television device illustrated in FIG. 1.
FIG. 3 is a schematic cross-sectional view along the line 200-200 in FIG. 2.
FIG. 4 is an exploded perspective view of the liquid crystal television device according to one or more embodiments of the first example of the present invention.
FIG. 5 is a front view of a panel post according to one or more embodiments of the first example of the present invention.
FIG. 6 is a perspective view of the panel post according to one or more embodiments of the first example of the present invention.
FIG. 7 is a plan view of a reflective sheet according to one or more embodiments of the first example of the present invention.
FIG. 8 is a front view of a panel post according to one or more embodiments of a second example of the present invention.
FIG. 9 is a perspective view of the panel post according to one or more embodiments of the second example of the present invention.
FIG. 10 is a front view of a panel post according to one or more embodiments of a third example of the present invention.
FIG. 11 is a perspective view of the panel post according to one or more embodiments of the third example of the present invention.
FIG. 12 is a front view of a panel post according to one or more embodiments of a first modified example of the present invention.
FIG. 13 is a front view of a panel post according to one or more embodiments of a second modified example of the present invention.
FIG. 14 is a front view of a panel post according to one or more embodiments of a third modified example of the present invention.
FIG. 15 is a front view of a panel post according to one or more embodiments of a fourth modified example of the present invention.

### [Detailed Description of Embodiments]

Embodiments of the present invention will be described below based on drawings.

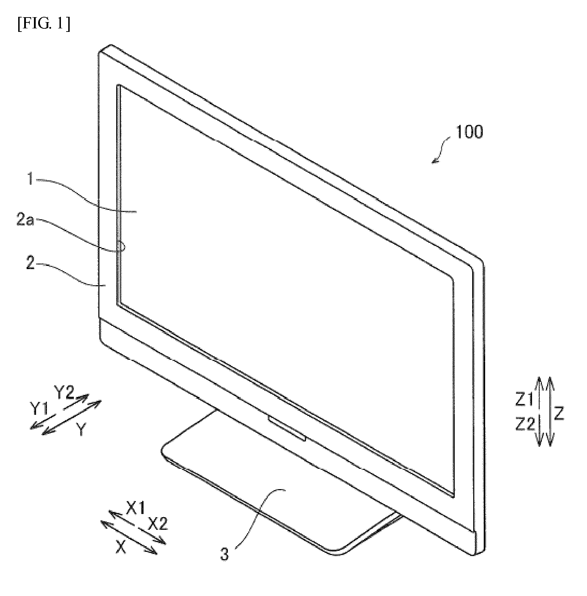

First, a configuration of a liquid crystal television device 100 according to one or more embodiments of a first example of the present invention will be described with reference to FIGS. 1 to 7. The liquid crystal television device 100 is an example of a "display device" of the present invention.

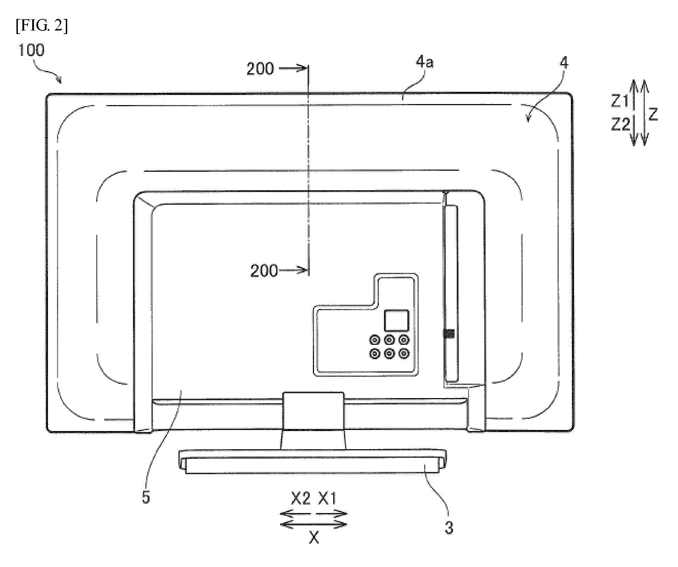

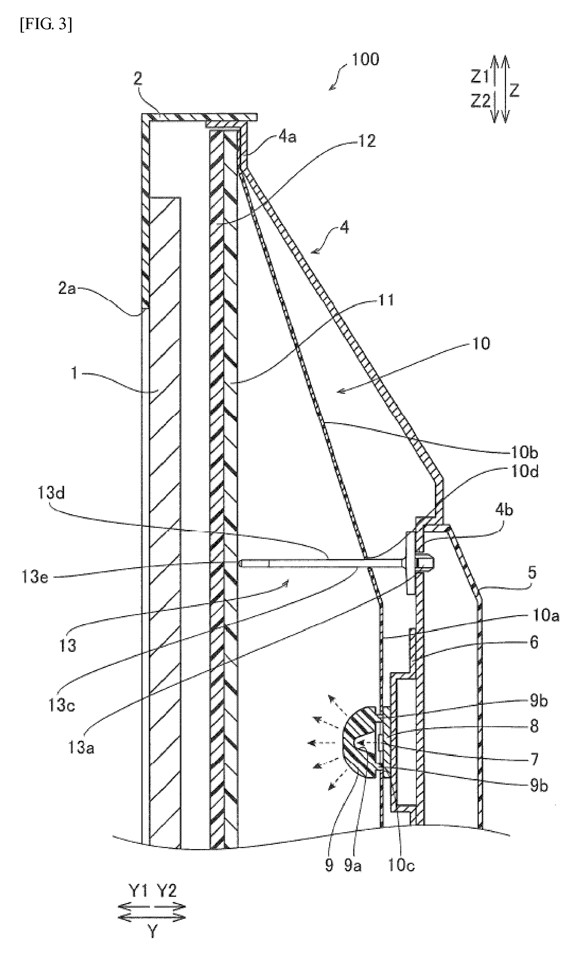

As illustrated in FIGS. 1 and 2, the liquid crystal television device 100 comprises a display unit 1 comprising a liquid crystal cell and displays a video, a front portion enclosure 2 made of resin that supports the display unit 1 from a front surface side (arrow Y1 direction side), and a stand member 3 made of resin that supports the liquid television device 100 from below (arrow Z2 direction side). The front portion enclosure 2 is formed in a frame shape having an outer shape of a rectangular shape when viewed from a front surface (when viewed from the arrow Y1 direction side). Specifically, an opening portion 2a of a rectangular shape for exposing the display unit 1 on the front surface side is provided near a central portion of the front portion enclosure 2. Moreover, as illustrated in FIG. 3, the front portion enclosure 2 is formed in a concave shape that sinks forward (arrow Y1 direction).

Furthermore, according to one or more embodiments of the first example as illustrated in FIGS. 2 and 3, the liquid crystal television device 100 comprises a rear frame 4 made of sheet metal combined with the front portion enclosure 2 from a back surface side (arrow Y2 direction side). This rear frame 4 may comprise an edge portion 4a of rectangular shape that fits into a back surface side of the front portion enclosure 2. Moreover, the rear frame 4 may be formed in a concave shape that sinks backward (arrow Y2 direction). The rear frame 4 may be fixed to the front portion enclosure 2 by a screw member (not illustrated). Moreover, a cover member 5 made of resin having a rectangular shape smaller than the rear frame 4 is disposed on a back surface side of the rear frame 4. The cover member 5 is provided so as to cover various substrates (not illustrated), such as a power source substrate and a signal processing substrate, disposed on a back surface of the rear frame 4. Moreover, the cover member 5 is fixed to the rear frame 4 by a screw member (not illustrated). A rear portion enclosure corresponding to the front portion enclosure 2 is configured by this rear frame 4 and this cover member 5.

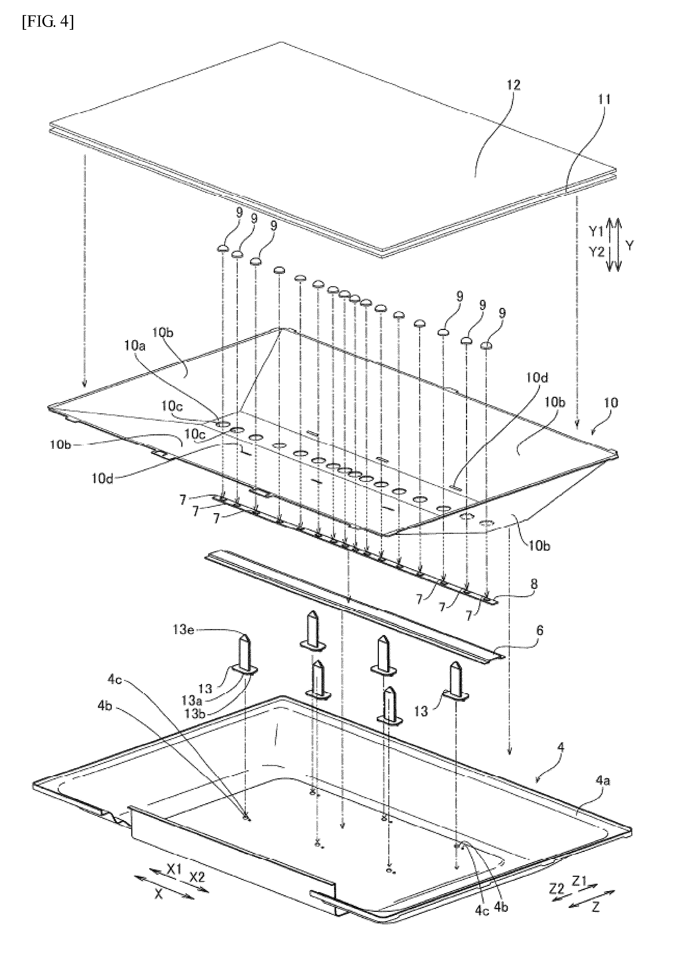

According to one or more embodiments of a first example as illustrated in FIG. 3, a heat sink 6 made of sheet metal is disposed on a top surface (surface on the arrow Y1 direction side) of the rear frame 4. Moreover, a light source 7 that irradiates light from the back surface side (arrow Y2 direction side) to the display unit 1 may be disposed on a top surface of the heat sink 6. In the embodiment shown in Fig. 3, the light source is mounted on a substrate 8. The light source 7 may comprise a white light-emitting diode (LED) or the like. Moreover, as illustrated in FIG. 4, a plurality of the light sources 7 may be mounted at intervals on a top surface of the substrate 8 along a direction (X direction) in which the substrate 8 extends.

Furthermore, according to one or more embodiments of the first example as illustrated in FIGS. 3 and 4, a plurality of diffuser lenses 9 that respectively cover the plurality of light sources 7 may be installed on the top surface (surface on the arrow Y1 direction side) of the substrate 8 on which the plurality of light sources 7 is mounted. Each diffuser lens 9 may be made of a resin such as acrylic and may have a function (see the dotted lines with arrows in FIG. 3) of diffusing an emission light from the respective light source 7 to a display unit 1 side. As illustrated in FIG. 3, a concave portion 9a may be provided near a central portion (position corresponding to the light source 7 on the top surface of the substrate 8) of a bottom surface of the diffuser lens 9. Moreover, a boss 9b of columnar shape extending to a substrate 8 side from the bottom surface of the diffuser lens 9 may be provided on the diffuser lens 9, and the diffuser lens 9 may be installed in the position corresponding to the light source 7 on the top surface of the substrate 8 by this boss 9b being adhered to the top surface of the substrate 8.

Furthermore, according to one or more embodiments of the first example as illustrated in FIGS. 3 and 4, a plurality of panel post fixing openings 4b and 4c may be provided on a top surface (surface on the arrow Y1 direction side) of the rear frame 4. A panel post 13 may be fixed by a fixing portion 13a of the panel post 13 being fitted into the panel post fixing opening 4b and a fixing portion 13b of the panel post 13 being fitted into the panel post fixing opening 4c. The fixing portion 13a may be provided with a pair of hooking portions and may be formed so as to be less likely to be pulled out once fitted into the panel post fixing opening 4b. Moreover, the fixing portion 13b prevents the panel post 13 from rotating by being fitted into the panel post fixing opening 4c. Here, according to one or more embodiments of the first example, the panel post 13 comprises a first top surface 13c and a second top surface 13d and is disposed so that the first top surface 13c faces the light source 7. The panel post 13 is an example of a "support member" of the present invention, the first top surface 13c is an example of a "first top surface" of the present invention, and second top surface 13d is an example of "second top surface" of the present invention.

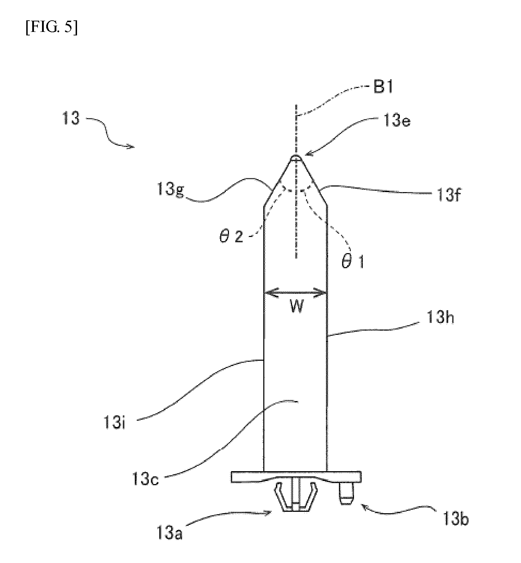

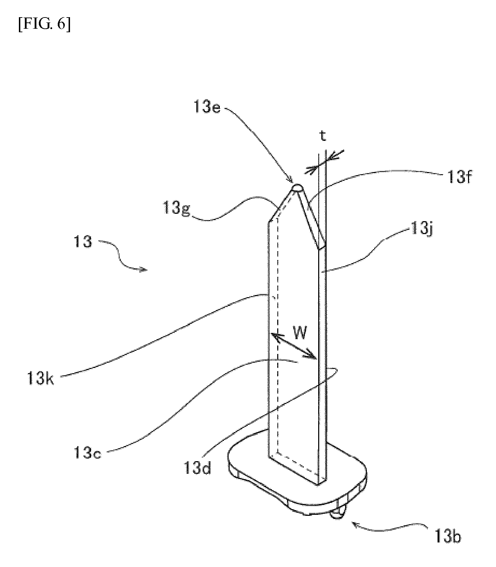

According to one or more embodiments of a first example as illustrated in FIGS. 5 and 6, according to one or more embodiments of the first example, the panel post 13 may be made of polycarbonate (PC), which is a material that can transmit light, and may have a contact portion 13e contacting a diffuser panel 11, two upper sides 13f and 13g extending from the contact portion 13e to outer sides, and two lateral sides 13h and 13i extending from the upper sides 13f and 13g in a direction opposite the diffuser panel 11. The contact portion 13e may be formed in a substantially hemispherical shape and may punctually contact the diffuser panel 11. Moreover, inclination angles θ1 and θ2 of the two upper sides 13f and 13g, respectively, may be both be, for example, about thirty degrees relative to a straight line B1 extending in a vertical direction relative to the diffuser panel 11 so as to pass through the contact portion 13e. Moreover, a thickness t of the panel post 13 may be about 1/6 of a width W in a direction parallel to a top surface of the diffuser panel 11 in the panel post 13.

Furthermore, according to one or more embodiments of the first example as illustrated in FIGS. 3, 4, and 7, a reflective sheet 10 made of resin that reflects light from the light source 7 to the display unit 1 side may be disposed between the substrate 8 and the diffuser lens 9. This reflective sheet 10 may have a shape conforming to the rear frame 4 (concave shape sinking to the arrow Y2 direction side) when disposed on the top surface of the substrate 8. Specifically, the reflective sheet 10 may have a reflective sheet bottom surface 10a that may have a rectangular shape extending in a lateral direction (X direction) and four reflective sheet inclined surfaces 10b disposed so as to surround four sides of the reflective sheet bottom surface 10a. As illustrated in FIG. 4, the reflective sheet bottom surface 10a may be formed so as to extend parallel to the diffuser panel 11 that will be described below. Moreover, the reflective sheet inclined surface 10b may be formed to extend in an inclined manner from an end portion of the reflective sheet bottom surface 10a toward the edge portion 4a of the rear frame 4.

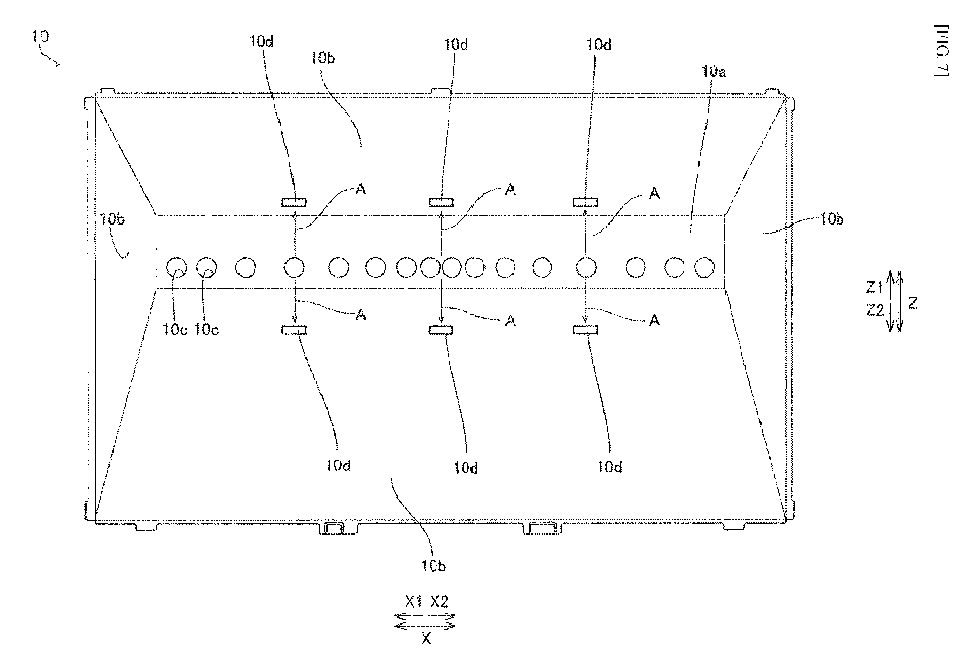

Furthermore, according to one or more embodiments of the first example as illustrated in FIG. 7, a plurality of light source opening portions 10c corresponding respectively to the plurality of light sources 7 (diffuser lenses 9) may be provided, for example along a straight line, at intervals in the lateral direction (X direction) on the reflective sheet bottom surface 10a. Moreover, a panel post opening portion 10d may be provided on the reflective sheet inclined surface 10b so that the panel post 13 fixed to the rear frame 4 can penetrate the reflective sheet 10 and support the diffuser panel 11 that will be described below. The panel post opening portion 10d may be provided in a position where light can be transmitted through the panel post 13 disposed in a position opposing the light source 7.

Here, according to one or more embodiments of the first example, as illustrated in FIGS. 3 and 4, the diffuser panel 11 made of resin that further diffuses to the display unit 1 side light diffused by the diffuser lens 9 may be disposed between the reflective sheet 10 and the display unit 1, and the diffuser panel 11 may be supported from the back surface side by the contact portion 13e of the panel post 13. Moreover, the diffuser panel 11 may be formed in a tabular shape extending in a Z direction and the X direction. An optical sheet 12 that aligns a polarization direction of light from the diffuser panel 11 and emits the light to the display unit 1 may be disposed between the diffuser panel 11 and the display unit 1, and the optical sheet 12 may extend in the Z direction and the X direction and may be formed in a tabular shape similar to that of the diffuser panel 11. The diffuser panel 11 and the optical sheet 12 are an example of an "optical member" of the present invention.

Furthermore, according to one or more embodiments of the first example, in the display unit 1, display of an image is performed by changing a transmittance of a liquid crystal comprised in the display unit 1 relative to the light whose polarization direction is aligned that is emitted from the optical sheet 12.

According to one or more embodiments of the first example, as described above, the display unit 1, the plurality of light sources 7 that irradiates the light to the display unit 1, the diffuser panel 11 and the optical sheet 12 disposed between the display unit 1 and the light source 7, and the panel post 13 that is configured to transmit the light from the light source 7 and supports the diffuser panel 11 and the optical sheet 12 from the back surface side are provided. The panel post 13 has the first top surface 13c and second top surface 13d and is disposed so that the first top surface 13c faces the light source 7. By this, unevenness in an amount of light in the display unit 1 that displays by the light transmitted through the diffuser panel 11 and the optical sheet 12 can be suppressed from occurring because an amount of light reflected or refracted at inner sides of side surfaces 13j and 13k of narrow widths and perpendicular to the first top surface 13c and second top surface 13d of the panel post 13 of plate shape with the small thickness t.

Furthermore, according to one or more embodiments of the first example, as described above, the panel post 13may have the contact portion 13e that contacts the diffuser panel 11, the upper sides 13f and 13g extending from the contact portion 13e to the outer sides of the panel post 13, and the lateral sides 13h and 13i extending from the upper sides 13f and 13g to the side opposite the diffuser panel 11, and may be configured so that the inclination angle θ1 of the upper side 13f relative to the straight line B1 extending in the vertical direction relative to the diffuser panel 11 so as to pass through the contact portion 13e of the panel post 13 is fifteen degrees or more and less than ninety degrees. By this, a gap increases between the two lateral sides 13h and 13i extending from the upper sides 13f and 13g to the side opposite the diffuser panel 11. That is, shadows occurring due to light reflecting or refracting at the inner sides of the side surfaces 13j and 13k of the panel post 13 do not approach each other because widths W of the first top surface 13c and second top surface 13d widen. As a result, the unevenness in the amount of light can be suppressed from occurring in the display unit 1 that displays by the light transmitted through the diffuser panel 11 and the optical sheet 12.

Furthermore, according to one or more embodiments of the first example, as described above, the panel post 13 may have the two upper sides 13f and 13g, and both the inclination angles θ1 and θ2 of the two upper sides 13f and 13g relative to the straight line B1 may be fifteen degrees or more and less than ninety degrees. By this, the gap increases between the two lateral sides 13h and 13i extending from the two upper sides 13f and 13g to the side opposite the diffuser panel 11. That is, the shadows occurring due to the light reflecting or refracting at an inner side of a side surface of the panel post 13 do not approach each other because widths of the first top surface 13c and second top surface 13d widen. As a result, the unevenness in the amount of light can be suppressed from occurring in the display unit 1 that displays by the light transmitted through the diffuser panel 11 and the optical sheet 12.

Furthermore, according to one or more embodiments of the first example, as described above, the thickness t of the panel post 13 may be about 1/6 of the width W in the direction parallel to the top surface of the diffuser panel 11 in the first top surface 13c of the panel post 13. By this, the unevenness in the amount of light in the display unit 1 that displays by the light transmitted through the diffuser panel 11 and the optical sheet 12 can be effectively suppressed from occurring because the amount of light reflected or refracted at the inner sides of the side surfaces 13j and 13k that have narrow widths identical to the thickness t of the panel post 13 decreases as the thickness t of the panel post 13 can be decreased.

### (Second example)

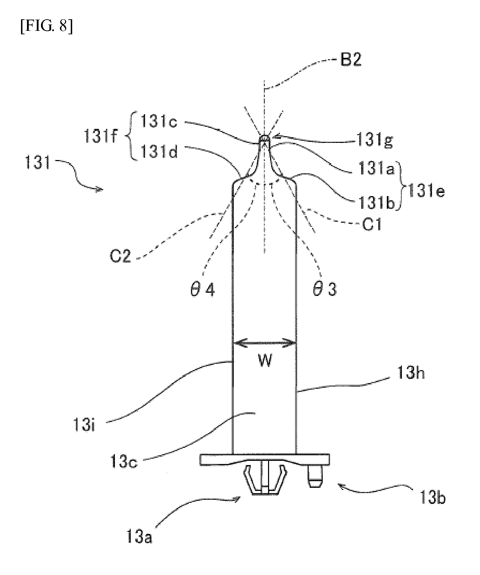

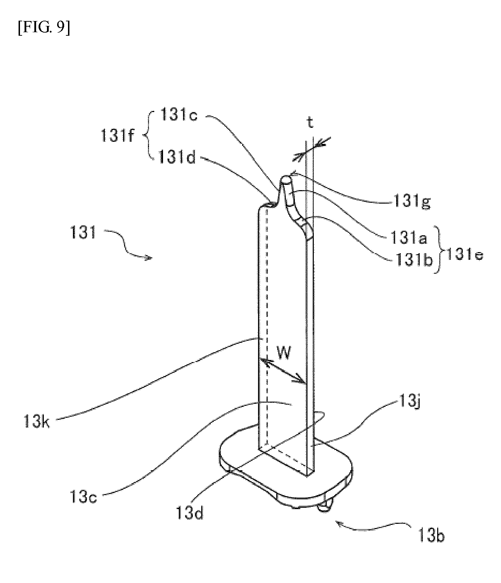

Next, a configuration of a panel post 131 according to one or more embodiments of a second example will be described with reference to FIGS. 8 and 9. According to one or more embodiments of the second example, unlike the panel post 13 of the first example where the two upper sides 13f and 13g are configured to have a straight-line shape, an upper side is configured to have a concave shape recessed toward an opposite direction side relative to the diffuser panel 11.

As illustrated in FIG. 8, according to one or more embodiments of the second example, the panel post 131 may have a contact portion 131g, which may comprise a portion contacting the diffuser panel 11, and upper sides 131e and 131f extending from the contact portion 131g to the outer sides of the panel post 131. The upper side 131e may have an upper side upper portion 131a that may be connected to the contact portion 131 g in a smooth curved surface and whose inclination angle may be small relative to a straight line B2 extending in a vertical direction relative to the diffuser panel 11 so as to pass through the contact portion 131 g, and an upper side lower portion 131b that may be connected to the upper side upper portion 131a in a smooth curved surface and whose inclination angle is large relative to the straight line B2. The upper side 131f may have an upper side upper portion 131c that may be connected to the contact portion 131 g in a smooth curved surface and whose inclination angle may be small relative to the straight line B2, and an upper side lower portion 131 d that may be connected to the upper side upper portion 131c in a smooth curved surface and whose inclination angle may be large relative to the straight line B2. Inclination angles θ3 and θ4 of an average inclination (see the dotted line C1 in FIG. 8) of the upper side 131e relative to the straight line B2 and an average inclination (see the dotted line C2 in FIG. 8) of the upper side 131f may be both of about thirty degrees. Moreover, other configurations of the panel post 131 according to the second example are similar to those of the first example above.

According to one or more embodiments of the second example, as described above, the upper sides 131e and 131f of the panel post 131 are configured to have the concave shape recessed toward the side opposite the diffuser panel 11. By this, shadows occurring due to the light emitted from the light source 7 being reflected or refracted by inner sides of the upper sides 131e and 131f of the panel post 131 can be diffused and made less noticeable as a distance between the upper sides 131e and 131f and the diffuser panel 11 increases. Because the upper sides 131e and 131f of the panel post 131 are formed to have the concave shape recessed toward the opposite direction side relative to the diffuser panel 11, a material of the panel post 131 can be reduced by a corresponding amount. Moreover, other effects of the panel post 131 according to the second example are similar to those of the first example above.

### (Third example)

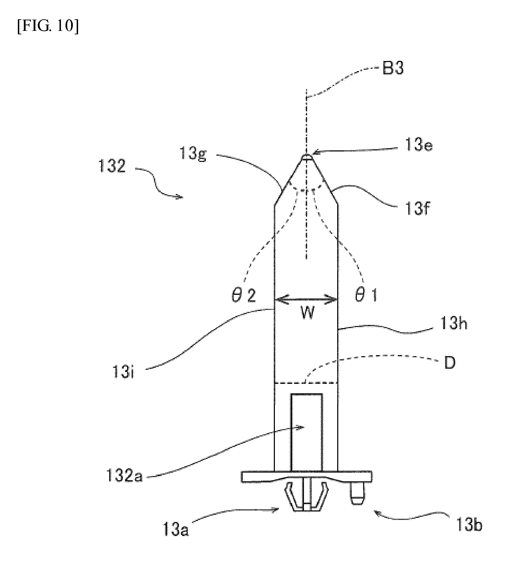

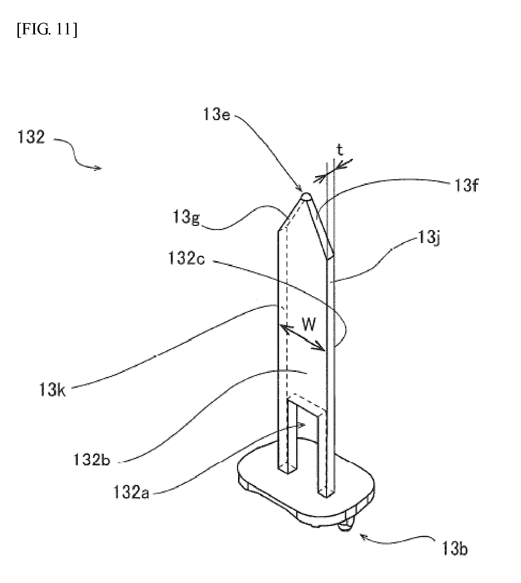

Next, a configuration of a panel post 132 according to one or more embodiments of a third example will be described with reference to FIGS. 10 and 11. According to one or more embodiments of the third example, unlike the panel post 13 of the first example and the panel post 131 of the second example where an opening is not provided in a region in the panel post 13 where a shadow falls, an opening portion 132a may be formed in a region (a region at and below the dotted line D in FIG. 10) in a panel post 132 where a shadow does not fall.

According to one or more embodiments of the third example as illustrated in FIGS. 10 and 11, the opening portion 132a may be formed in a region (the region at and below the dotted line D in FIG. 10) in the panel post 132 where a shadow does not fall on the diffuser panel 11. The opening portion 132a may have a substantially square shape, may be a portion from an upper portion of the fixing portion 13a to the dotted line D, may be formed with a width smaller than W, and may be opened so as to penetrate second top surface 132c from first top surface 132b. Moreover, other configurations of the panel post 132 according to the third example may be similar to those of the first example above.

According to one or more embodiments of the third example, as described above, the opening portion 132a may be formed in the region in the panel post 132 where the shadow does not fall on the diffuser panel 11. By this, the panel post 132 can be formed with less material by an amount corresponding to a material removed from the panel post 132. The unevenness in the amount of light to the diffuser panel 11 and the display unit 1 does not occur even when the shadow occurs due to the opening portion 132a because the opening portion 132a is provided in the region in the panel post 132 where the shadow does not fall on the diffuser panel 11. Therefore, an amount of the material of the panel post 132 can be reduced while suppressing the unevenness in the amount of light.

The embodiments disclosed herein are examples on all counts and should not be considered limiting. The scope of the present invention is indicated not by the above description of the embodiments but by the scope of patent claims and includes meanings equivalent to the scope of patent claims and all modifications within the scope.

For example, in the first to third examples above, embodiments are illustrated where a television device is used as an example of the display device of the present invention, but the present invention is not limited thereto. One or more embodiments of the present invention may be used in a display device other than the television device. For example, it may be used in a general display device such as a display device for a personal computer (PC).

Furthermore, in the first to third examples above, embodiments are illustrated where a diffuser panel made of resin is used as an example of an optical member of plate shape of the present invention, but the present invention is not limited thereto. According to one or more embodiments of the present invention, an optical member of plate shape other than the diffuser panel made of resin may be used.

Furthermore, in the first to third examples above, embodiments are illustrated where only one substrate with a plurality of light sources mounted in one straight line thereon is provided, but the present invention is not limited thereto. According to one or more embodiments of the present invention, two or more substrates with the plurality of light sources mounted in one straight line thereon may be provided.

Furthermore, in the first to third examples above, embodiments are illustrated where six panel posts are disposed, but the present invention is not limited thereto. According to one or more embodiments of the present invention, the television device may be configured by seven or more or less than six panel posts.

Furthermore, in the first to third examples above, embodiments are illustrated where a contact portion of the panel post is formed in the substantially hemispherical shape, but the present invention is not limited thereto. According to one or more embodiments of the present invention, the contact portion of the panel post does not need to be formed in the substantially hemispherical shape. For example, as illustrated in first to fourth modified examples, the contact portion of the panel post may be formed in a curved surface shape so as to make linear contact with the diffuser panel.

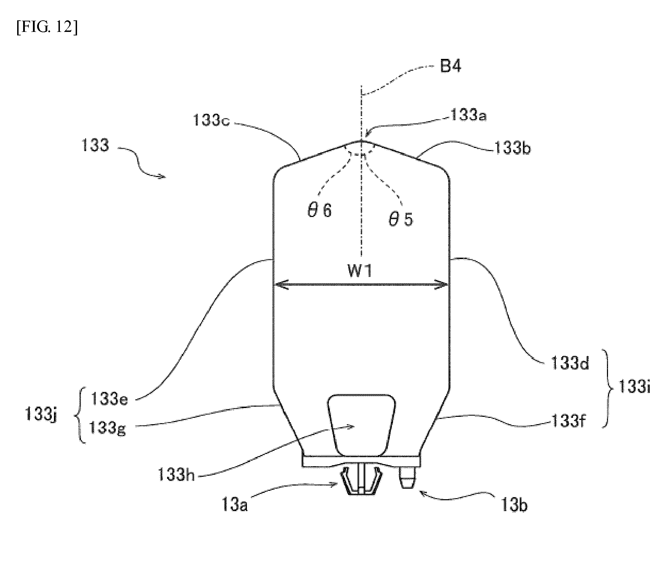

Here, one or more embodiments of the first modified example as illustrated in FIG. 12 may have the following configuration. A panel post 133 may have a contact portion 133a that is a portion contacting the diffuser panel 11, two upper sides 133b and 133c extending from the contact portion 133a to the outer sides of the panel post 133, and two lateral sides 133i and 133j extending from the upper sides 133b and 133c in the direction opposite the diffuser panel 11. The contact portion 133a may be formed in a curved surface shape and may linearly contact the diffuser panel 11. Moreover, inclination angles θ5 and θ6 of the two upper sides 133b and 133c relative to a straight line B4 extending in the vertical direction relative to the diffuser panel 11 so as to pass through the contact portion 133a may be both of about seventy degrees. Moreover, the lateral side 133i may comprise a lateral side upper portion 133d and a lateral side lower portion 133f; the lateral side upper portion 133d may have a straight-line shape extending from the upper side 133b in the vertical direction relative to the diffuser panel 11, and the lateral side lower portion 133f may have a straight-line shape extending at an incline from a lower end of the lateral side upper portion 133d to a center side of the panel post 133. Similarly, the lateral side 133j may comprise a lateral side upper portion 133e and a lateral side lower portion 133g; the lateral side upper portion 133e may have a straight-line shape extending from the upper side 133c in the vertical direction relative to the diffuser panel 11, and the lateral side lower portion 133g may have a straight-line shape extending at an incline from a lower end of the lateral side upper portion 133e to the center side of the panel post 133. A thickness of the panel post 133 may be about 1/5 or less than a width W1 of the panel post 133 represented by a gap between the lateral side upper portions 133d and 133e. Moreover, provided in the panel post 133 is an opening portion 133h, for example of a trapezoidal shape with rounded corners whose length of a side on an upper side is longer than a length of a side on a lower side.

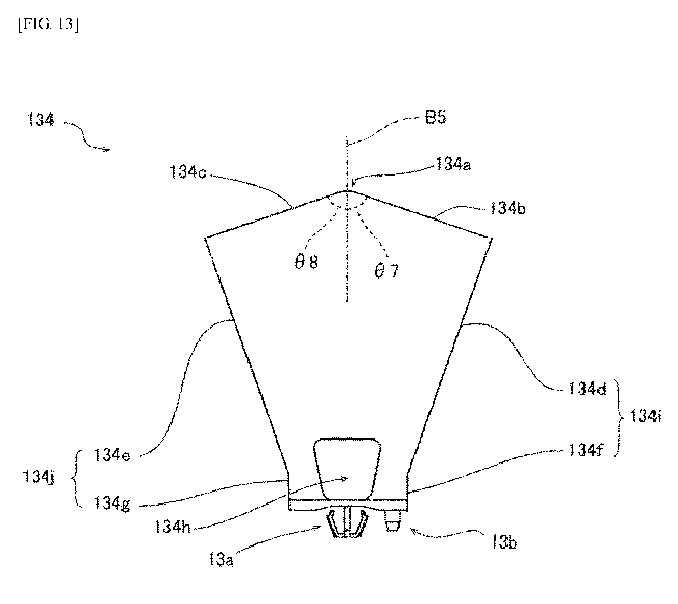

Furthermore, one or more embodiments of the second modified example as illustrated in FIG. 13 may have the following configuration. A panel post 134 may comprise a contact portion 134a contacting the diffuser panel 11, two upper sides 134b and 134c extending from the contact portion 134a to the outer sides of the panel post 134, and two lateral sides 134i and 134j extending from the upper sides 134b and 134c in the direction opposite the diffuser panel 11. The contact portion 134a may be formed in a curved surface shape and may linearly contact the diffuser panel 11. Moreover, inclination angles θ7 and θ8 of the two upper sides 134b and 134c relative to a straight line B5 extending in the vertical direction relative to the diffuser panel 11 so as to pass through the contact portion 134a may be both of about seventy degrees. Moreover, the lateral side 134i may comprise a lateral side upper portion 134d and a lateral side lower portion 134f; the lateral side upper portion 134d may have a straight-line shape extending from the upper side 134b so as to incline to a center side of the panel post 134, and the lateral side lower portion 134f may have a straight-line shape extending from a lower end of the lateral side upper portion 134d in the vertical direction relative to the diffuser panel 11. Similarly, the lateral side 134j may comprise a lateral side upper portion 134e and a lateral side lower portion 134g; the lateral side upper portion 134e may have a straight-line shape extending from the upper side 134b so as to incline to the center side of the panel post 134, and the lateral side lower portion 134g may have a straight-line shape extending from a lower end of the lateral side upper portion 134e in the vertical direction relative to the diffuser panel 11. Moreover, provided in the panel post 134 is an opening portion 134h, for example of a trapezoidal shape with rounded corners whose length of a side on an upper side is longer than a length of a side on a lower side.

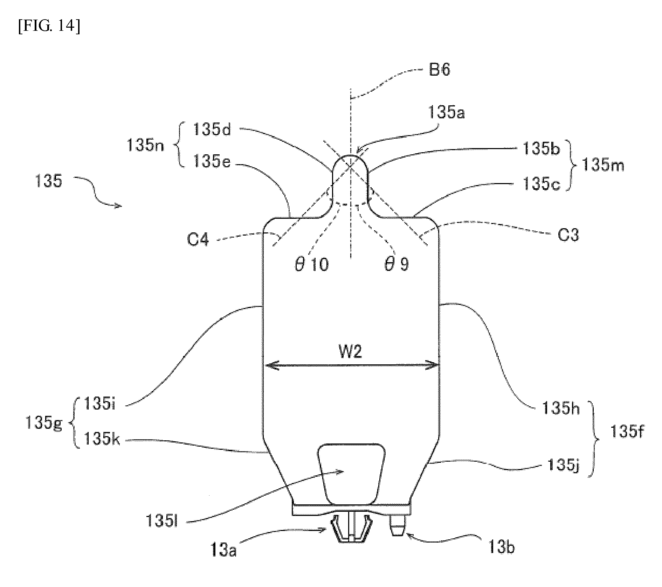

Furthermore, one or more embodiments of the third modified example as illustrated in FIG. 14 may have the following configuration. A panel post 135 may have a contact portion 135a contacting the diffuser panel 11, two upper sides 135m and 135n extending from the contact portion 135a to the outer sides of the panel post 135, and two lateral sides 135h and 135i extending from the upper sides 135m and 135n in the direction opposite the diffuser panel 11. The contact portion 135a may be formed in a curved surface shape and may linearly contact the diffuser panel 11. Moreover, the upper side 135m may have an upper side upper portion 135b of a straight-line shape extending from the contact portion 135a in a direction perpendicular to the top surface of the diffuser panel 11, and an upper side lower portion 135c of a straight-line shape that is connected to the upper side upper portion 135b with a curved surface and extends to an outer side of the panel post 135 in a direction parallel to the top surface of the diffuser panel 11. Moreover, the upper side 135n may have an upper side upper portion 135d of a straight-line shape extending from the contact portion 135a in the direction perpendicular to the top surface of the diffuser panel 11, and an upper side lower portion 135e of a straight-line shape that is connected to the upper side upper portion 135d with a curved surface and extends to the outer side of the panel post 135 in the direction parallel to the top surface of the diffuser panel 11. Inclination angles θ9 and θ10 of an average inclination (see the dotted line C3 in FIG. 14) of the upper side 135m and an average inclination (see the dotted line C4 in FIG. 14) of the upper side 135n relative to a straight line B6 may be both of about forty-five degrees. Moreover, the lateral side 135f may comprise a lateral side upper portion 135h and a lateral side lower portion 135j; the lateral side upper portion 135h may have a straight-line shape extending from the upper side 135m in the vertical direction relative to the diffuser panel 11, and the lateral side lower portion 135j may have the straight-line shape extending at an incline from a lower end of the lateral side upper portion 135h to the center side of the panel post 135 Similarly, the lateral side 135g may comprise a lateral side upper portion 135i and a lateral side lower portion 135k; the lateral side upper portion 135i may have a straight-line shape extending from the upper side 135n in the vertical direction relative to the diffuser panel 11, and the lateral side lower portion 135k may have a straight-line shape extending at an incline from a lower end of the lateral side upper portion 135i to the center side of the panel post 135 A thickness of the panel post 135 may be about 1/5 or less than a width W2 of the panel post 135 represented by a gap between the lateral side upper portions 135i and 135h. Moreover, provided in the panel post 135 is an opening portion 1351, for example of a trapezoidal shape with rounded corners whose length of a side on an upper side is longer than a length of a side on a lower side.

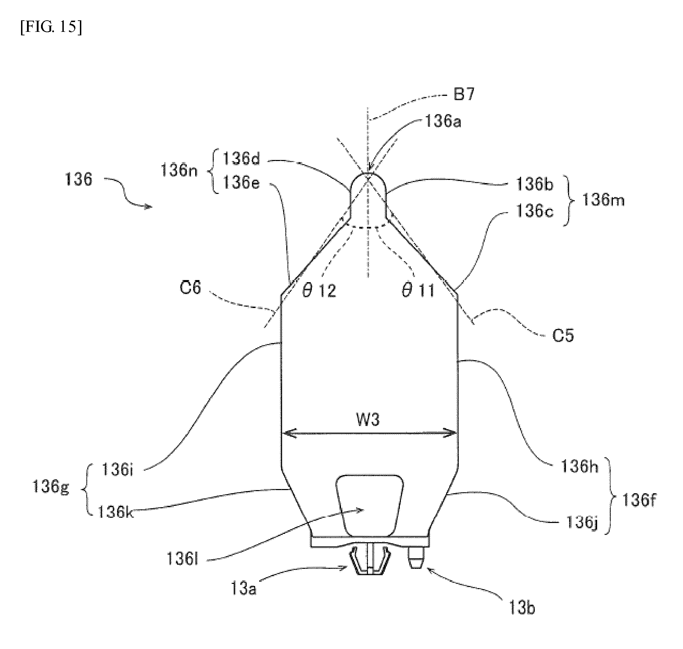

Furthermore, one or more embodiments of the fourth modified example as illustrated in FIG. 15 may have the following configuration. A panel post 136 may have a contact portion 136a contacting the diffuser panel 11, two upper sides 136m and 136n extending from the contact portion 136a to the outer sides, and two lateral sides 136f and 136g extending from the upper sides 136m and 136n in the direction opposite the diffuser panel 11. The contact portion 136a may be formed in a curved surface shape and may linearly contact the diffuser panel 11. Moreover, the upper side 136m may have an upper side upper portion 136b of a straight-line shape extending from the contact portion 136a in the direction perpendicular to the top surface of the diffuser panel 11, and an upper side lower portion 136c of a straight-line shape extending from the upper side upper portion 136b to an outer side of the panel post 136. The upper side 136n may have an upper side upper portion 136d of a straight-line shape extending from the contact portion 136a in the direction perpendicular to the top surface of the diffuser panel 11, and an upper side lower portion 136e of a straight-line shape extending from the upper side upper portion 136d to the outer side of the panel post 136. Inclination angles θ11 and θ12 of an average inclination (see the dotted line C5 in FIG. 15) of the upper side 136m and an average inclination (see the dotted line C6 in FIG. 15) of the upper side 136n relative to a straight line B7 may be both of about forty degrees. Moreover, the lateral side 136f may comprise a lateral side upper portion 136h and a lateral side lower portion 136j; the lateral side upper portion 136h may have a straight-line shape extending from the upper side 136m in the vertical direction relative to the diffuser panel 11, and the lateral side lower portion 136j may have a straight-line shape extending at an incline from a lower end of the lateral side upper portion 136h to a center side of the panel post 136. Similarly, the lateral side 136g may comprise a lateral side upper portion 136i and a lateral side lower portion 136k; the lateral side upper portion 136i may have a straight-line shape extending from the upper side 136n in the vertical direction relative to the diffuser panel 11, and the lateral side lower portion 136k may have a straight-line shape extending at an incline from a lower end of the lateral side upper portion 136i to the center side of the panel post 136. A thickness of the panel post 136 may be about 1/5 or less than a width W3 of the panel post 136 represented by a gap between the lateral side upper portions 136i and 136h. Moreover, provided in the panel post 136 is an opening portion 1361, for example of a trapezoidal shape with rounded corners whose length of a side on an upper side is longer than a length of a side on a lower side.

Furthermore, in the first to third examples above, embodiments are illustrated where two upper sides extending from the contact portion of the panel post to outer sides are provided, but the present invention is not limited thereto. According to one or more embodiments of the present invention, a panel post of tabular shape may be formed by configuring one upper side and having two lateral sides extending from both ends of the upper side to an opposite direction side of the diffuser panel.

Furthermore, in the first to third examples above, embodiments are illustrated where a lateral side of the panel post is formed to extend in a direction perpendicular to a surface parallel to a top surface of the diffuser panel, but the present invention is not limited thereto. According to one or more embodiments of the present invention, the lateral side may be formed to extend in a direction not perpendicular to the surface parallel to the top surface of the diffuser panel, as in the lateral sides of the panel post according to one or more embodiments of the second modified example, and do not need to be straight lines, as in the lateral sides of the panel posts in the first to fourth modified examples.

Furthermore, in the first to third examples above, embodiments are illustrated where inclination angles of two upper sides relative to a straight line extending in a vertical direction relative to the diffuser panel so as to pass through the contact portion of the panel post are both about thirty degrees, but the present invention is not limited thereto. According to one or more embodiments of the present invention, the two inclination angles may differ or may form inclination angles other than thirty degrees. For example, the inclination angles are of about seventy degrees in the first and second modified examples, about forty-five degrees according to one or more embodiments of the third modified example, and about forty degrees in the fourth modified example.

Furthermore, in the first to third examples above, embodiments are illustrated where a thickness of the panel post is about 1/6 of a width in a direction parallel to a top surface of the diffuser panel in first top surface of the panel post, but the present invention is not limited thereto. According to one or more embodiments of the present invention, the thickness of the panel post may be formed in a size other than about 1/6 of the width in the direction parallel to the top surface of the diffuser panel in the first top surface of the panel post. The thickness of the panel post may be about 1/5 or less than the width in the direction parallel to the top surface of the diffuser panel in the first top surface of the panel post.

Furthermore, according to one or more embodiments of the second example above, embodiments are illustrated where the two upper sides of the panel post have a concave shape recessed toward a side opposite the diffuser panel, but the present invention is not limited thereto. For example, the present invention may be configured so that only one upper side from among the two upper sides of the panel post may have the concave shape recessed toward the side opposite the diffuser panel.

Furthermore, according to one or more embodiments of the third example above, embodiments are illustrated where an opening portion of a square shape is formed in a region in the panel post where a shadow does not fall on the diffuser panel, but the present invention is not limited thereto. According to one or more embodiments of the present invention, an opening portion of a shape other than the square shape may be formed. For example, in the first to fourth modified examples, the opening portion is formed with a trapezoidal shape with rounded corners.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Explanation of Reference Numbers]

1 Display unit
7 Light source
11 Diffuser panel (optical member)
12 Optical sheet (optical member)
13, 131, 132, 133, 134, 135, 136 Panel post (support member)
13c, 132b First top surface (first top surface)
13d, 132c Second top surface (second top surface)
13e, 131g, 133a, 134a, 135a, 136a Contact portion
13f, 13g, 131e, 131f, 133b, 133c, 134b, 134c, 135m, 135n, 136m, 136n Upper side
13h, 13i, 133i, 133j, 134i, 134j, 135f, 135g, 136f, 136g Lateral side
132a, 133h, 134h, 1351, 1361 Opening portion
100 Liquid crystal television device (display device)
B1 to B7 Straight line
t Thickness
W, W1, W2, W3 Width
θ1 to θ12 Inclination angle

## Claims

1. A display device (100), comprising:
a display unit (1);
a light source (7) disposed on a back surface side of the display unit (1) and configured to irradiate light to the display unit (1);
an optical member (11, 12) disposed between the display unit (1) and the light source (7); and
a support member (13; 131136) of tabular shape configured to transmit light irradiated from the light source (7) and support the optical member (11, 12) from a back surface side of the optical member (11, 12), wherein
the support member (13; 131136) comprises a first top surface (13c; 132b) and a second surface (13d; 132c) and is disposed so that the first top surface (13c; 132b) faces the light source (7).

2. The display device (100) according to claim 1, wherein
the support member (13; 131136) further comprises:
a contact portion (13e; 131g; 133a; 134a; 135a; 136a) contacting the optical member (11, 12);
a first upper side (13f; 131e; 133b; 134b; 135m; 136m) extending from the contact portion (13e; 131g; 133a; 134a; 135a; 136a) to an outer side of the support member (13; 131-136); and
a lateral side (13h; 13i; 133i; 133j; 134i; 134j; 135f; 135g; 136f; 136g) extending from the first upper side (13f; 131e; 133b; 134b; 135m; 136m) to a side opposite the optical member (11, 12), wherein
the first upper side (13f; 131e; 133b; 134b; 135m; 136m) of the support member (13; 131-136) has a predetermined inclination angle (θ_{1;} θ_{3;} θ_{5;} θ_{7;} θ_{9 ;}θ₁₁) relative to a straight line (B1) extending in a vertical direction relative to the optical member (11, 12) and passing through the contact portion (13e; 131g; 133a; 134a; 135a; 136a) of the support member (13; 131-136).

3. The display device (100) according to claim 2, wherein the predetermined inclination angle (θ_{1;} θ_{3;} θ_{5;} θ_{7;} θ_{9;}θ₁₁) of the first upper side (13f; 131e; 133b; 134b; 135m; 136m) is 15 degrees or more and less than 90 degrees.

4. The display device (100) according to claim 2 or claim 3, wherein the support member (13; 131-136) further comprises a second upper side (13g; 131f; 133c; 134c; 135n; 136n) having a predetermined inclination angle (θ_{2;} θ_{4;} θ_{6;} θ_{8;} θ_{10;} θ₁₂) relative to a straight line extending in a vertical direction relative to the optical member (11, 12) and passing through the contact portion (13e; 131g; 133a; 134a; 135a; 136a) of the support member (13; 131-136).

5. The display device (100) according to claim 4, wherein the inclination angle of the second upper side (13g; 131f; 133c; 134c; 135n; 136n) is the same as the inclination angle (θ_{2;} θ_{4;} θ_{6;} θ_{8;} θ_{10;} θ₁₂) of the first upper side (13f; 131e; 133b; 134b; 135m; 136m).

6. The display device (100) according to any of claims 1 to 5, wherein a thickness (t) of the support member (13; 131-136) is 1/5 or less than a width (W; W_{1;} W_{2;} W₃) of the first surface (13c; 132b) of the support member (13; 131-136), the width (W; W_{1;} W_{2;} W₃) being in a direction parallel to a top surface (13c; 132b; 13d; 132c) of the optical member (11, 12).

7. The display device (100) according to any of claims 1 to 6, wherein the contact portion (13e; 131g; 133a; 134a; 135a; 136a) contacting the optical member (11, 12) has a hemispherical shape.

8. The display device (100) according to any of claims 1 to 7, wherein the first and/or the second upper side (13f; 13g; 131e; 131f; 133b; 133c; 134b; 134c; 135m; 135n; 136m; 136n) of the support member (13; 131-136) has a concave shape recessed toward the side opposite the optical member (11, 12).

9. The display device (100) according to any of claims 1 to 8, wherein the support member (13; 131-136) further comprises an opening portion (132a; 133h; 134h; 1351; 1361) formed in a region where a shadow does not fall on the optical member (11, 12).
